(19) **Europäisches Patentamt / European Patent Office / Office européen des brevets**

(11) **EP 1 936 353 A1**

(12) # EUROPEAN PATENT APPLICATION

(43) Date of publication:
**25.06.2008 Bulletin 2008/26**

(51) Int Cl.:
*G01N 15/14* $^{(2006.01)}$      *C12M 1/34* $^{(2006.01)}$

(21) Application number: **06126431.3**

(22) Date of filing: **18.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **TumorTec GmbH**
**50933 Köln (DE)**

(72) Inventor: **Schinköthe, Timo**
**51465  Bergisch-Gladbach (DE)**

(74) Representative: **Helbing, Jörg**
**Patentanwälte**
**von Kreisler Selting Werner**
**Postfach 10 22 41**
**50462 Köln (DE)**

(54) **Method for determination of cell viability by using flow cytometry with fixed volume acquisition**

(57)     Present invention provides a method for comparing the content of a specific cell subpopulation in cell suspension samples by determining the count of cells of said subpopulation per unit volume in each sample, using a flow cytometer with fixed volume acquisition, but without the use of an internal or external standard. Thus, the effect of a test compound on cell viability can be determined, especially the cytotoxic or cytostatic effect of anticancer drugs. The method is a useful tool for predicting the biological activity of cytotoxic or cytostatic compounds on cells of the same kind as the cells in the sample. Furthermore, a kit for performing the method is provided.

**EP 1 936 353 A1**

## Description

Present invention provides a method for comparing the content of a specific cell subpopulation in cell suspension samples by determining the count of cells of said subpopulation per unit volume in each sample, using a flow cytometer with fixed volume acquisition, but without the use of an internal or external standard. Thus, the effect of a test compound on cell viability can be determined, especially the cytotoxic or cytostatic effect of anticancer drugs. The method is a useful tool for predicting the biological activity of cytotoxic or cytostatic compounds on cells of the same kind as the cells in the sample. Furthermore, a kit for performing the method is provided.

## Background of the Invention

Cell viability is the term designating the extent to which the cells in a given cell containing sample are living. Cell viability is an important parameter in biological analysis which is usually determined by enumeration of living and/or dead cells present in a sample. It is a criterion for cell morbidity in apoptosis, for cytotoxicity of test compounds like exogenous enzyme substrates and drugs, for chemosensitivity of cells, and for cellular interactions; and its determination may be used for elimination of dead cells from a cell culture by cell sorting.

There are several methods that can be used to quantify viability of cells (compare, e.g., Coder, D.M., Assessment of Cell Viability, in: Current Protocols in Cytometry, 9.2.1 - 9.2.14 (1997)). Cell viability may be judged by changes in membrane permeability and/or physiological state inferred from the exclusion of certain dyes or the uptake and retention of others. Typically, the aforesaid methods use non-permeant dyes (e.g. propidium iodide, 7-amino actinomycin D (7-AAD)) which do either not enter cells with intact cell membranes or are not resilient in cells with active cell metabolism. Thus, live cells with intact membranes are distinguished by their ability to exclude dyes that easily penetrate dead or damaged cells.

Chemosensitivity assays today are routinely performed to test the cytotoxic efficiency of drugs on certain cells under defined cell culture conditions. Prominently, *ex vivo* chemosensitivity assays were developed in order to predict individual treatment outcome in various neoplastic diseases. The known assays can be divided into three different groups:

a) Clonogenic assays: the proliferative capacity of single cells is measured. The cells are plated in dishes within a nutrient agar that contains the test substance. The dish is incubated for several weeks and the amount of resulting colonies is counted by eye or semi-automated systems (e.g., Courtenay, V.D. and Mills, J., Br. J. Cancer 37(2): 261-8 (1978)).

b) Surrogate assays/colorimetric assays: a surrogate for cell activity or induction of apoptosis is measured. Commonly used is the formazan salt methyl-thiazol-tetrazolium (MTT) for cell activity (Cole, S.P., Cancer Chemother. Pharmacol., 17(3):259-63 (1986)) or a substrate for measuring of caspase activity (Staib, P. et al., BMC Cancer, 5(1): 60 (2005)). High-throughput *in vitro* antitumor drug screening methods that evaluate cell viability include the colorimetric assay based on tetrazolium salts like MTT.

c) DiSC-assay (differential staining cytotoxicity assay): The DiSC assay is a dye exclusion test that is based upon morphological differentiation between living and dead tumor and non-tumor cells by light microscopy (Weisenthal, L.M. et al., Cancer Res. 43:258-264 (1983); Bird, M.C. et al., Leukemia Res. 10:445-449 (1986)). The cell viability is determined directly by counterstaining of the cells and a light microscopical counting of the living cells (Staib, P. et al., Br. J. Haematol., 128(6):783-91 (2005)).

However, said known chemosensitivity assays have several disadvantages. Clonogenic assays suffer from the disadvantage of poor plating efficiency of tumor cells and their tendency to form cell clumps. The consequence are unreliable drug survival curves. Colorimetric assays have several limitations including major variabilities of color formation between different cell lines and variabilities resulting from the age and condition of the cell culture. In the MTT assay, contamination with more than 30% of non-neoplastic cells may interfere with proper interpretation (Kaspers, G.J. et al., Br. J. Cancer 70:1047-1052 (1994)).

For the DiSC-assay the cells must be transferred onto a slide, dried and stained afterwards. Subsequent assessment of cell kill is labour intensive and subject to individual interpretation. Moreover, the volume information and therefore the knowledge of the amount of surviving cells per volume are lost after drying. This is due to the fact that the liquid part of the sample is usually removed by suction, which leads to cell loss and inhomogeneous distribution ("half moon" pattern) of the remaining cells on the slide. Furthermore, only a small fraction of the mounted cells (usually ca. 10 to 20 %) is counted, and the area of counting is not necessarily representative for the cell concentration due to the aforementioned inhomogeneous distribution. Thus, an internal standard is often necessary (e.g. fixed duck erythrocytes (DRBC)).

The volume information will also be lost if an existing method for measuring the cell viability by flow cytometry (as represented, e.g., by the Cell Viability Kit, Cat. No. 349483, BD Biosciences) is used for measuring chemosensitivity.

Flow cytometry is a well-known method for identifying and distinguishing between different cell types in a non-homogeneous sample. The sample may be drawn from a variety of sources such as blood, lymph, or cell suspensions from solid tissues. In the cytometer, cells are passed through a cuvette flow cell where they are beamed by one or more energy sources. In the sensing regions, light which is scattered or emitted by the cells is detected. Cell counting and differentiation is based on the data collected for each cell (recorded "event").

The use of flow cytometers in assays requiring cell analysis is well established, predominantly in diagnostics, medicine and life sciences. Flow cytometers always determine relative values of scattered light and emitted fluorescence. The simultaneous measurement of multiple parameters of a single cell is used to characterize and/or to identify cells. Different kinds of cells (cell subpopulations) can be differentiated from each other. The instrument outputs cell counts for the predefined cell subpopulations. In a standard protocol 10,000 cells are analyzed in total. The absolute cell concentration is not determined. Cell concentration only influences the time needed to analyze 10,000 cells.

A typical information derivable from this analysis is that an analyzed sample contains, e.g., a population of monocytes which is increased in comparison to other cell subpopulations present in the sample. Whether the number of monocytes per ml blood is increased as well cannot be deduced directly.

While it is possible to use fluorescence or luminescence based flow cytometry to count the ratio of different cells in a sample and to distinguish between various cell subpopulations, the number of cells of each subpopulation will generally be determined relatively, i.e. flow cytometry will not give an absolute cell count for cells of a given specific subpopulation for a specific sample volume. This is especially true for fluorescence activated flow cytometry and FACS. Performing absolute counts on a sample requires that all the cells in a precisely measured volume are counted. Knowing such count and knowing the volume containing the cells allows the calculation of the total count of cells in a sample. An absolute cell number that is determined for a constant sample volume is essential in all tests that compare cell properties, especially their survival and viability, under different conditions. Cells under different growth conditions might proliferate, stay alive without proliferation or they die and disintegrate. Therefore, the same relative number of living cells might represent different events: 70% living cells can be detected if 30% of the initially living cells died within the analyzed time period. But 70% living cells are also the result if only 30% survived and if 51% of the dead cells are already disintegrated so that they are not counted as a dead cell. Thus, it is essential to determine the absolute cell count.

Cell viability tests are possible with a standard fluorescence activated flow cytometer. However, flow cytometers in general provide relative cell counts, i.e. cell counts in relation to an internal or external standard or in relation to the total cell count in a sample. The absolute cell number (e.g. cells/ml sample) can not be determined directly.

Besides the use of flow cytometers, a couple of methods exist to count cells and some of them are even suitable to discriminate dead cells from viable cells. For example, hemacytometers which are microscopic chambers with a defined volume may be used. A visible grid allows counting the cells microscopically either in a non-automated manner or with an automated microscope.

Flow cytometers generally use two methods for detecting and measuring particles: light scattering and the Coulter principle which is based on impedance.

Flow cytometers which use the Coulter principle do measure the analyzed sample volume and output a cell concentration. However, the Coulter principle is only suitable for the determination of the size of a cell, but not of any further cell characteristics. This precludes the counting of cell subpopulations which are characterized not by their size, but by a different characteristic or marker (like a fluorescent marker).

Flow cytometers, especially fluorescence activated flow cytometers like FACS apparatus, which use the light scattering method, do not determine cell concentrations. Neither the volume analyzed nor the flow rate are calibrated parameters. All fluorescence activated flow cytometers stop analyzing a sample if the preselected cell count is reached or if the preselected maximum time for an analysis is elapsed. The method of WO 97/19189 uses this kind of flow cytometers and therefore depends on the weak information given by the relative value 'percentage of viable cells'.

Even fluorescence activated flow cytometers which use a syringe pump for sample uptake are not designed to analyze a defined volume (e.g. the FACSArray of Becton Dickinson, BD). These apparatuses allow adjusting the volume that is filled in the sample chamber but the stop criteria are again cell counts and maximum time.

Methods to quantify cells with flow cytometers are either indirect methods that depend on an internal standard or they use flow cytometers that combine in one apparatus a Coulter counter and fluorescence activated flow cytometry (WO 96/04544).

Manufacturers of fluorescence activated flow cytometers generally supply their customers with instructions on how to quantify cells. All these instructions rely on the use of internal standards. BD, for example, offers tests for *in vitro* diagnostic use under the lable TriTEST that comprise TruCOUNT tubes. The intended use of this product is to determine by flow cytometry the relative and absolute counts of lymphocyte subsets in erythrocyte-lysed whole blood. TruCOUNT tubes contain a defined number of fluorescent beads as an internal calibrator. BD does not mention any alternative method of determining absolute counts with fluorescence activated flow cytometers.

In the Cytometry Discussion Group of the Purdue University, i.e. the leading discussion group for questions in flow cytometry, questions concerning absolute cell counts are posted again and again (http://www.cyto.purdue.edu/). All answers recommend to use beads either as an internal standard or as a calibrator for constant flow rate. If a constant flow rate shall be used Howard Shapiro (Author of the standard book 'Practical Flow Cytometry') gave the advice to calibrate the flow cytometer before and after an analysis (Shapiro's message: http://www.cyto.purdue.edu/ hmarchiv/ 2005/1249.htm; 2005 July 22).

All these citations demonstrate that a determination of absolute cell counts with a conventional flow cytometer is not self-evident to a person skilled in the art.

The control software does not provide a feature to use the flow cytometer in a way that is suitable for counting absolute cell counts.

WO 96/04544 provides a determination of absolute cell counts for the different kinds of cells in whole blood by integrating a conventional hematology analyzer (which provides absolute cell counts) with a FACS instrument (which provides information on the ratio of different cells) and correlating the collected data by a special program. WO 94/16305 and WO 00/20873 provide a metering and transfer valve for measuring the cell count in a defined fraction of an aspirated sample in a flow cytometer. Alternatively, the volume of the complete sample which is aspirated into the flow cytometer may be preset if the sampler is sufficiently precise in its volume measurement (like, e.g., the sampler of the FACSArray used in present invention; or the automated fluid handling system of WO 02/101360).

Two flow cytometers that do not use the Coulter principle seem to be suitable for determination of absolute cell counts at first glance. However, both instruments can only realize this by additional technical efforts. Partec's 'Absolute Volumetric Counting' is based either on two electrodes within the sample that measure a fixed sample volume or on an optical control of the stepper motor that drives the syringe pump. The latter method determines the volume by controlling the flow rate. The Guava® PCA™-96 System also controls the flow rate and can only guarantee accurate counting for samples with $10^4$ to 5 x $10^5$ cells/ml. For all other flow cytometers it is known that they cannot control sample flow rates (Howard Shapiro: http://www.cyto.purdue.edu/ hmarchiv/2005/1249.htm; 2005 July 22).

In order to compare two independent samples, all known methods for counting cells use either an internal standard, i.e. addition of a reference compound to each sample which corresponds to the sample volume (e.g. bird red blood cells for light microscopy or fluorescing beads for flow cytometry), or an external standard, i.e. a standard with a known cell concentration is counted and the results are correlated to the cell counts in the samples.

However, a drawback of internal standards in flow cytometry is that if the ratio of the reference compound (e.g. of fluorescent beads as reference particles in FACS analysis) to the measured cells in the sample is either very high or very low (e.g. 5000 cells per bead), counting errors (e.g. omission of only one bead) will lead to considerable deviation of the determined cell count from the absolute cell number in a sample.

EP 0529666 describes a method for measurement of absolute cell count in a sample using an external standard with a known cell count. However, using an external standard necessitates calibration of the cell counting device in advance of the actual measurement and ideally afterwards as well. If the flow rates are the same in the initial and in the final calibration measurement one has to assume that they have been stable as well in the meantime.

Staib, P. et al., Br. J. Haematol., 128(6):783-91 (2005), describe the use of the DiSC assay for chemosensitivity assays. This assay possesses all the drawbacks outlined above for DiSC. Moreover, an internal standard is indispensable (fixed duck erythrocytes (DRBC)), and the slides have to be evaluated by skilled technicians. As a further safety measure, a random set of assays were counted by two technicians independently to ensure continuous quality of evaluation. This is time consuming and laborious.

Up to now there is no method for cell viability determination, especially for chemosensitivity determination which is using a direct absolute count of the concentration of living cells in a sample without measuring an additional factor in the sample which is outside of the cells of interest, like an internal or external standard.

Furthermore, a drawback of existing methods for measuring cytotoxicity of test compounds is the exposure of the technician performing the assay to the cytotoxic compound. Usually, the technician must add the test compound to the cells, mix the cells with the test compound and usually an internal standard, and then transfer the sample to a separate container which fits to the sampler of the flow cytometer or transfer the sample to a slide for microscopic analysis. Each separate step raises the possibility for exposure.

Up to now everybody who intended to count cells in a flow cytometer had to rely on one of the known and complicated methods that are propagated by the manufacturers of flow cytometers. These methods either depend on beads or on special flow cytometers with additional technical parts. The use of beads makes the method of cell analyzes more expensive and more complicated. To obtain correct cell counts the beads must be in a single bead suspension, the bead concentration must be determined exactly by the manufacturer and it must be controlled by the user that the beads are clearly discriminated from all other cells or from cell fragments within the sample. This solution is, from a technical point of view, a complicated one.

In conclusion, the existing techniques for measuring cell viability and chemosensitivity have the disadvantage that they are not based on reliable absolute cell counts. A direct comparison between two samples is not possible without using an internal or external standard. Moreover, the known techniques for determination of cell counts are laborious, time consuming and require expert knowledge.

Thus, it is an object of present invention to provide a method for the fast, easy and reliable comparison of the number of cells of a given cell subpopulation in different samples. It is another object of present invention to provide a simple method for evaluating the chemosensitivity of cells, especially of cancer cells, to test compounds. Based upon this evaluation method, it is a further object of present invention to provide a reliable tool for the prognosis of the therapeutic effect of an antitumor agent.

**Summary of the Invention**

The present invention provides a method for comparison of cell properties, especially of cell viability, in different cell suspension samples. The method comprises a one step determination of the absolute cell count for a specific cell subpopulation in each sample.

More specifically, the present invention provides a method for comparison and determination of the effect of test compounds on cells. This effect is dependent on the compound structure and/or compound concentration (i.e. dose dependent). The results of this method can be used for prognosis of the *in vivo* effect of the tested compounds.

The method according to present invention is suitable for tests which compare cell counts in a plurality of samples within one assay. Said method is more simple than the known methods but nevertheless reliable.

Thus, present invention provides

(1) a method for comparing the content of a specific cell subpopulation in at least two samples of same or different liquid cell suspensions by determining the count of cells of said specific subpopulation per unit volume in each of said at least two samples, said method comprising the steps of

(a) supplying a predetermined fixed volume of each sample to a flow cytometer with fixed volume acquisition and delivery means;

(b) detecting and counting the total number of the cells of the specific cell subpopulation in the complete fixed volume from step (a) by flow cytometry;

(c) calculating the number of counted cells per fixed volume (absolute cell count) for the specific cell subpopulation within the sample from the count result and the predetermined aspirated volume without the use of an internal or external standard; and

(d) comparing the absolute cell count of the samples with each other, thus determining whether the samples contain the same or different amounts of the specific cell subpopulation;

(2) the method of (1) above, wherein the effect of a test compound on cell viability is determined, and which additionally comprises one or both of the steps (a') incubation of the cells with the test compound prior to step (a); and

(e) correlating the decrease or increase of the absolute cell count of viable cells in samples containing different test compound concentrations to the concentration of the test compound;

(3) the method of (1) or (2) above, which is for assessing the cytotoxic or cytostatic effect of anticancer drugs, wherein the cells in the sample are cancer cells;

(4) the method of any one of (1) to (3) above which is used for identification of

(i) cytostatic and/or cytotoxic compounds;
(ii) antagonists to cytostatic and/or cytotoxic compounds;
(iii) compounds which enhance cell viability; or
(iv) compounds stimulating cell division;

(5) the method of any one of (1) to (3) above which is used for prediction of the *in vivo* or *in vitro* biological activity of cytotoxic or cytostatic compounds on cells of the same kind as the cells in the sample; and

(6) a kit for performing the method of any of (1) to (5) above, comprising a selection of cytotoxic or cytostatic compounds which are active agents in the therapy of diseases in a mammal, and optionally a positive and/or a negative control. In the kit, the compounds and the optional control are coated onto the surfaces of the wells of a microtiter plate in a predetermined amount.

**Short description of the figures**

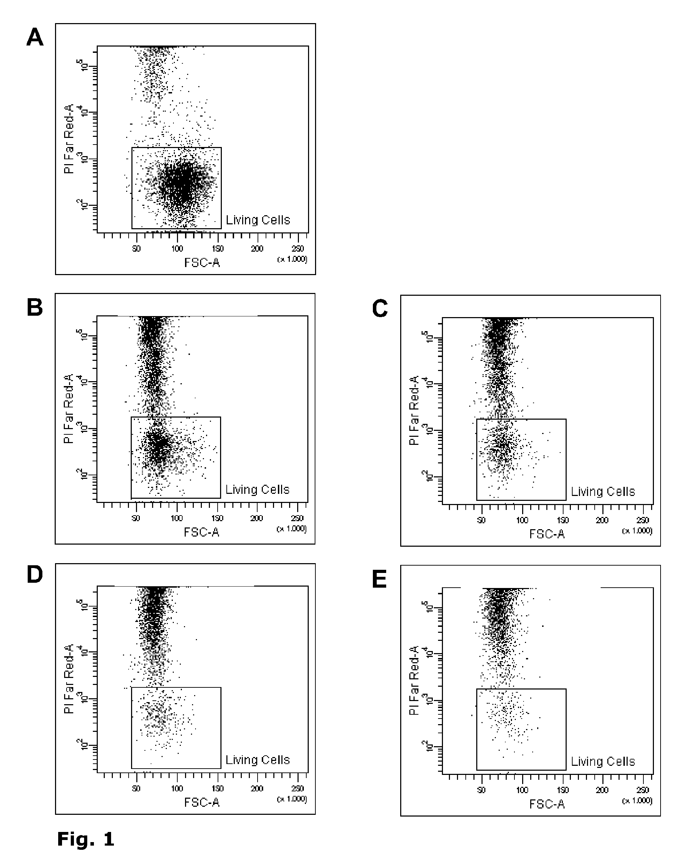

Fig. 1: Detection of living cells in a patient's sample after 4 days cultivation with fludarabine phosphate (Fludarabine®). Mononuclear cells were cultivated in cell culture medium without or with different concentrations of fludarabine phosphate. Displayed are dot plots with the FSC signal on the x-axis (parameter for cell size) and the signal of the DNA-intercalating agent propidium iodide (PI) on the y-axis (parameter for cell death). Living cells that do not incorporate PI are boxed. Each dot represents a single cell. The living cells within the box are counted. The increase in fludarabine phosphate concentration results in a decreasing number of living cells (Fludarabine® concentration B 0.46 $\mu$g/ml, C 1.39 $\mu$g/ml, D 4.17 $\mu$g/ml, E 12.5 $\mu$g/ml). Dot plot A shows cells after 4 days cultivation without a cytostatic drug (negative control without fludarabine phosphate).

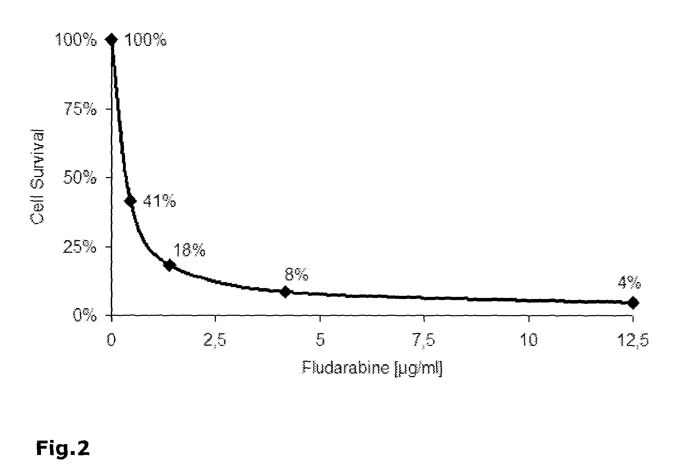

Fig. 2: Effect of fludarabine phosphate on cell survival (compare Example 1, Tab. 1). 100 % cell survival: control without fludarabine phosphate or any other cytostatic drug. y-axis: percent cell survival; x-axis: concentration of fludarabine phosphate.

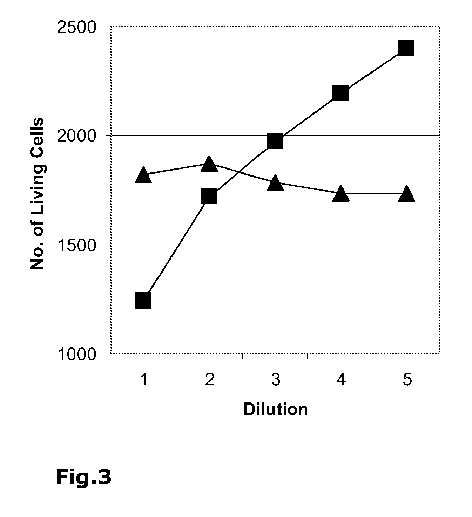

Fig. 3: Living cells were counted in identical samples with different modes of analysis (compare example 4). All samples contained identical numbers of living cells to which decreasing numbers of dead cells were added in a constant volume. The samples were stained with propidium iodide to discriminate living and dead cells. First mode of analysis was the classical approach with 3000 analyzed cells in total and the determination of the number of living cells therein (method 1; shown as solid triangles). Second mode of analysis (method 2) was to analyze the complete sample volume taken up by the instrument (FACSArray, Becton Dickinson; shown as solid squares) by overriding the settings that are provided with the instrument. Table 4 in example 4 shows the experimentally adjusted cell concentrations (living cells/ml; dead cells/ml) and the amounts of living cells actually detected with method 1 and method 2.

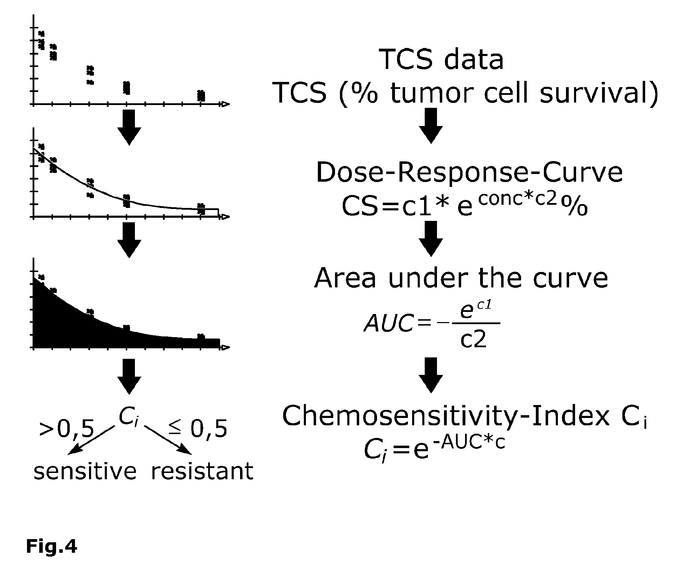

Fig. 4: Flowsheet for the mathematical determination of the chemosensitivity index $C_i$ (see detailed description). Conc, drug test concentration; e, Euler number; TCS, percent tumour cell survival; CS, cell survival; constant $c_1$, y-axis distance; constant $c_2$, slope of the curve; c, drug-specific constant.

**Detailed Description of the Invention**

The following terms and definitions are used:

The "absolute cell count" is the number of counted cells per fixed volume. "Fixed volume" in the context of present invention means a volume that is delivered and measured reproducibly by the device which is used for cell counting. It is not necessary that the fixed volume is absolute in terms of metric units like liters or milliliters. But a "fixed volume" has to be the same whenever the analyses have to be compared directly as it is secured if all samples are measured with the same device. Counting is performed on a device for cell counting, like a flow cytometer or FACS. A "direct" method for determination of the absolute cell count is characterized in that it allows calculation of the absolute cell count just from the results of cell counting and from the sample volume which is supplied to the flow cytometer for cell counting. No internal or external standard is necessary.

The "absolute cell concentration" is the number of cells per defined volume (concentration) in a sample, as in the manner of cells/$\mu$l.

A "cell subpopulation" is a part or subdivision of a larger cell population. The members of this cell subpopulation share at least one attribute by which they can be distinguished from other subpopulations. E.g., the subpopulation "living cells" is distinguishable from dead and compromised cells by their ability to exclude propidium iodide. The total cell population of a sample consists of all cell subpopulations in said sample.

A "standard" is a suspension with particles of a defined concentration or a given number of particles which may be added to a given volume. The physicochemical properties of the particles are known. As "internal standard" these standard particles are mixed with a given volume of the sample. The flow cytometer must be able to clearly distinguish the "internal standard" from the cells to be analysed on the basis of at least one attribute. The number of detected standard particles is a measure for the analyzed volume.

As an "external standard" the standard material is measured before and/or after sample analysis to determine the cytometer's current flow rate. The flow rate and the time of analysis can then be used to calculate the sample volume.

A "plurality of samples" consists of at least 2 samples. It generally means a number of samples considerably exceeding 2, i.e. a lot of samples. The method of present invention is especially suitable for analysis of microtiter plate arrays, thus, the term "plurality of samples" preferably designates a number of samples of at least 10, more preferably at least 50. Especially preferred are sample numbers fitting into one microtiter plate.

"Cell viability" is the ability of a cell to live and to survive. In the context of present invention, it is furthermore a relative measure of the number of living cells of a specific cell subpopulation in a sample. It is furthermore a generic term which pertains not only to the survival and living of cells, but also to their ability to proliferate. Notably, the determination of cell viability does always imply information on cell death. This is due to the fact that the terms cell proliferation and cytostasis, as well as the terms cell survival and cell death are mutually exclusive.

Present invention provides a method which utilizes the determination of the absolute cell count of cells of a specific cell subpopulation in a sample, preferably of living cells in a sample.

The method of embodiment (1) is superior to any conventional flow cytometry method for counting cell subpopulations in a sample, as it is not biased by the presence of other cells besides the cells of the subpopulation of interest (compare Fig.3, Example 4). It does not even need the use of an internal standard.

A further advantage of present invention is the fact that the evaluation method for chemosensitivity which was developed for DiSC-assays (Staib et al., British Journal of Haematology, 2005, 128, 783-791) is now applicable in connection with a method of cell counting which is fast, reliable, easy to handle, and which allows automated and parallel handling of a plurality of samples.

In the method of embodiment (1), the flow cytometer preferably discriminates between cells of different cell subpopulations by optical measurement, more preferably is a fluorescence activated cell sorter (FACS). In addition, the cells of different subpopulations are discriminated from each other by their emission of fluorescence and/or scattered light.

It is furthermore preferred that the cell subpopulation which is determined in embodiment (1) is characterized by specific markers which are detectable by the flow cytometer. Preferred specific markers are fluorescent compounds including fluorescent dyes and antibodies having a fluorescent tag.

The at least two samples compared in the method of embodiment (1) are samples of same or different liquid cell suspensions. This includes samples from the same cell suspension, but taken at different time points, and samples from the same cell suspension, but treated with different test compounds and/or under different incubation conditions. Preferably, the samples contain the same kind of cells and/or were treated with the same test compound.

The cell subpopulation determined in embodiment (1) may be any cell subpopulation present in a cell suspension sample. However, in an especially preferred aspect of present invention, the cell subpopulation which is determined in embodiment (1) is the subpopulation consisting of living cells. This subpopulation is preferably characterized by a marker which allows to distinguish living cells from dead and damaged cells. As the sum of living (or viable) cells and dead (or compromised) cells in a sample must always be 100 % of all cells present in the sample, said marker is either specific for living or for dead cells. In a preferred aspect of present invention, a marker for dead or compromised cells is used. The number of living cells in the measured volume is in this case the number of detected cells which do not bear the marker. Preferred markers for dead or compromised cells are non-permeant dyes, which do not enter cells with intact cell membranes and therefore are excluded from living cells. Due to the ability to intercalate into double-stranded nucleic acids, certain fluorescent dyes serve as DNA stains. In particular propidium iodide and 7-amino actinomycin D (7-AAD) may be used for the determination and therefore discrimination of dead and damaged cells by the flow cytometer. The living cells are detected by their ability to scatter light in these cases.

Thus, in a special preferred aspect of embodiment (1), the method additionally comprises one or more of the following steps:

(a") treatment of the sample with a marker which is specific for a cell subpopulation prior to supplying it to the flow cytometer; and

(b') determination of absolute cell count of one or more specific cell types in the sample. In the method of embodiment (1), any cell type which can be analyzed by a flow cytometer may be contained in the cell suspension samples. In order to be suitable for cell analysis and cell counting with the flow cytometer, the samples must be single cell suspensions. Thus, prior to their application to the flow cytometer, it is necessary to detach the cells from the cell culture vial and to separate the cells from each other. The preparation of single cell suspensions may be performed by any separation method known in the art, including mechanical and enzymatic methods, temperature changes and changes of ion concentration.

Any type of cells may be analyzed by the method of embodiment (1) which can form or be transduced into a cell suspension. This encompasses cells from naturally occurring cell suspensions like blood, but also tissue cells which have been isolated from their native environment and were subsequently transduced into cell suspensions. Blood cells, especially the cell fraction that is enriched by density gradient centrifugation as blood mononuclear cells, are preferred.

This is especially the case for embodiments (2) and (3) of present invention.

The size of the cells analyzed by the method of embodiment (1) is generally in the range from small cells like bacteria (nm to $\mu$m) up to large cells like some algae (mm).

The cell suspension sample which is used in embodiment (1) is a sample taken from a cell suspension. This cell suspension is either a cell suspension culture or a suspension of cells prepared by mechanical or enzymatic dissociation of a tissue.

The method of embodiment (1) is suitable for eucaryotic and procaryotic cells, including bacteria, fungal cells, yeast, algae, higher plant cells, and mammalian (also human) cells. In a preferred aspect of present invention, eucaryotic cells are analyzed. Of these, mammalian cells are preferred, even more preferred are human cells.

As indicated above, the method of embodiment (1) is suitable for any cell type. It is especially suitable for cells with a high proliferation rate, preferably cancer cells (including cancer cell suspensions prepared by dissolving solid cancer cells and suspensions of cancer cells which do not need dissolving).

The method of present invention is performed using a flow cytometer with fixed volume acquisition. For flow cytometric analysis the application of the sample, the calibration of the flow cytometer and the detection of cells are performed according to the flow cytometer manufacturer's instructions. The sample volume which is supplied to the flow cytometer is set to a fixed volume for all analyses.

The fixed volume in step (a) of the method (1) may be any fixed volume which can be set for the flow cytometer. It is generally from 1 to 1000 $\mu$l, more preferably from 5 to 500 $\mu$l, more preferably from 10 to 100 $\mu$l, even more preferably from 15 to 50 $\mu$l. A preset fixed volume of 20 $\mu$l is most preferred. As outlined above, the unit "$\mu$l" is an instrument specific and not an absolute unit.

To realize the method (1) of present invention, the flow cytometer has to be used out of its usual specifications. Contradictory to the manufacturer's instructions the complete fixed volume is analyzed by the flow cytometer, irrespective of the duration of analysis or the number of cells passing the detection unit of the cytometer. In other words, one of the preselectable stop criteria for the flow cytometer analysis is set to an unreachably high value. In a preferred aspect, either the stop criterion 'time' for a single analysis is set to the maximum or to a time that is not reachable before the sample has been analyzed completely, or the stop criterion 'maximum counts' for a single analysis is set to the maximum or to a number that is not reachable before the sample has been analyzed completely.

This setting results in that the complete fixed sample volume is analyzed by the flow cytometer. As the sample volume is fixed and does therefore not vary from sample to sample, the cell counts of a given specific cell subpopulation for different samples can be compared with each other even though no internal standard is present.

The flow cytometer used in present invention may be any flow cytometer with a fixed volume acquisition and delivery system including flow cytometers which detect the cells by scattering light, fluorescence and/or luminescence. In a preferred aspect of present invention, the flow cytometer detects the cells by scattering light and/or fluorescence. It is more preferably selected from the group consisting of BD FACSArray (Becton Dickinson), BD FACSCanto with HTS (Becton Dickinson), BD FACSCalibur with HTS (Becton Dickinson), and Beckman Coulter Cytomics FC500 MPL. The means for fixed volume acquisition and delivery may be provided by the original flow cytometer as provided by the manufacturer, which is the case for the Becton Dickinson FACSArray, or may be added to the flow cytometer by refitting of the original instrument.

The fixed volume is supplied to the flow cytometer in step (a) of the method according to embodiment (1) by any means which is suitable to transfer a fixed liquid volume from a sample tube into the analytic path of the flow cytometer. The ways of supplying the fixed volume to the flow cytometer therefore encompass injection, aspiration or any other method for liquid sample application to an analytic device. The fixed volume is preferably supplied to the flow cytometer by injection or aspiration of the predetermined fixed volume in step (a) of the method. More preferably the fixed volume is aspirated into the flow cytometer.

Classical flow cytometers aspirate the sample directly from a tube. They aspirate the sample continuously until the sample tube is empty or until a user-defined number of cells or a time of analysis is reached. In these flow cytometers the sample tube is set under pressure to press the sample into a hollow needle.

The flow cytometers used in this invention are apparatuses that differ from the described classical flow cytometer in the kind of sample uptake. These flow cytometers have been designed to take up samples from an open sample container without applying overpressure. This is solved by aspirating the sample with a syringe and applying it afterwards in the analytical unit. The design of these sample loaders did not include the uptake of calibrated volumes. Therefore none of these instruments is able to determine absolute cell concentrations.

The sample loaders use precise syringe pumps so that they apply reproducible volumes to the analytical unit. This characteristic is used by the present invention and is not intended by the manufacturer or by any published method.

The fixed volume acquisition and delivery of the flow cytometer allows the one step determination of absolute counts of cells in a sample even without calibration steps before, between and/or after sample measurements or simultaneously thereto. It is preferred that neither in step (a) nor in step (b) of method (1) an internal standard is present. The counting in step (b) is furthermore performed without the use of an external standard.

In an especially preferred aspect of present invention, a flow cytometer which collects the samples to be measured from a microtiter plate or another multiwell-sample container is used in the method. Conventional flow cytometers insert a sample into a tube, close the top of the tube and increase the pressure within it. Thereby, the sample is pressed into the sampler and a continuous sample stream passes the flow cell. In contrast thereto, flow cytometers with a microtiter plate sampler (e.g. FACSArray from BD Biosciences) add one additional step in the beginning. A sampler takes a part of the sample and injects this part into a transfer station. The advantage of this step is that the measured sample can be taken not only from one position. The stop conditions for the data acquisition by a flow cytometer are usually the number of measured events or the duration of acquisition. In case a flow cytometer with a microtiter plate sampler has not reached the set stop conditions when the sampled volume is used up, it will also stop the acquisition. This is usually considered as a disadvantage of said microtiter plate feasible flow cytometers.

The aforementioned preferred aspect of the method of present invention takes advantage exactly of this technical disadvantage to measure the concentration of the vital cells in the sample. Namely, the regular stop condition (i.e. the number of events, the duration of acquisition or any other stop condition provided) is set to a value which is unreachable. This will lead to the effect that all events within the complete sampled volume are measured. This or a comparable use of a flow cytometer with a microtiter plate sampler is not proposed by the manufacturer (see page 13 "BD FACSArray Applications" from product booklet "BD FACSArray Bioanalyzer" published by BD Biosciences in 2005). By choosing unreachably high values or even the maximum values of the stop condition the flow cytometers are used in a manner that contradicts the instruments design and construction. The setting of high stop values for the analysis of a standard sample may result in false results because of data overflow.

The core piece of the method is the determination of an absolute cell count. The method uses conventional flow cytometers that take up a fixed sample volume. The volume is not defined absolutely but it is reproducible. In consequence the method does not determine an absolute cell concentration, but a cell number that may be designated as 'cells/relative volume unit'. This cell count can be used to compare cell numbers in different samples if they are analyzed with a single apparatus.

Thereby the method allows to quantify cells and to compare the influence of different growth conditions on subsets of cells. Exemplary cell subsets of interest might be viable cells, as it is the case in a chemosensitivity assay, or cells that express, bear or contain a special marker.

In general, it is sufficient to compare the results generated by a single apparatus. Nevertheless the method is not restricted to the use of a single analyzer if a normalization procedure is applied. This might be a normalization to a reference value. In a chemosensitivity assay, for example, this reference is the viability in a sample without cytostatic drugs.

The flow cytometer used in the method of present invention determines the complete number of cells of a cell subpopulation or of the total cell population in a fixed sample volume. The result is therefore an absolute cell count. If several cell counts are determined within the same fixed sample volume, which can be assured by using the same flow cytometer, the content of cells of the aforementioned cell (sub)population in the samples can be compared directly.

The method of present invention leads to results which are far more reliable than methods based on relative cell counts. This difference is shown in example 4 and figure 3.

The method of embodiment (1) is suitable for analysis of cells from a cell suspension culture or tissue in order to determine cell viability of a given cell subpopulation of interest. This includes the comparison of samples in order to assess a change (increase or decrease) in the presence of living cells, in cell proliferation, in cell metabolism, in the yield of biologically produced molecules, and/or the effects of exogenous substances ("test compounds") or of cell-cell interactions on cell viability. Vice versa, cytostasis and cell death can be assessed.

The method of embodiment (1) is especially suitable for comparison of samples containing one kind of cell suspension, but treated in different ways. This is the case when the effect of different test compounds on cell suspension is tested, or when a concentration range is assessed for a specific test compound. It is also the case when the tested cells are incubated under test conditions for different time periods.

The method (1) of present invention is in principle suitable for any kind of particle counting, but is preferably used for cell counting, more preferably for:

- counting of living cells after treatment of cells with cytostatic drugs;
- counting of living cells after treatment with substances that stimulate cell proliferation;
- counting of bacteria under antibiotic treatment;
- counting of bacteria, yeasts, or eukaryotic cells in the course of optimizing cell culture conditions; and
- counting cells as an indirect parameter of stimulatory or inhibitory effects of cell-cell-interactions or exogenous modulator molecules.

Examples for other particles this method might be used for are viruses, secreted vesicles, pollen, seeds and sperms. Especially viruses are suitable as object of analysis.

In the method of embodiment (2), the incubation with the test compound (step (a')) is performed by adding the test compound either to a cell suspension, a cell culture (suspension culture or dish culture) or to a tissue. Preferably, the test compound is added to a cell suspension or cell suspension culture. Tissue cells used in the method are preferably from isolated tissue, e.g. biopsy tissue. The test compound may be applied directly to the isolated tissue, but preferably the tissue is converted into a single cell suspension beforehand.

Step (a') of method (2) is preferably performed *in vitro.*

The test compounds used in method (2) are tested for their biological effects. Such effects include the induction of a change (increase or decrease) in the number of living cells, in cell proliferation, in cell metabolism, in the yield of biologically produced molecules, and/or cell viability. Furthermore, the potential of the test compounds to induce cytostasis and cell death can be assessed. Preferably, the determined effect of the test compound is

(i) cytotoxicity and/or cytostasis induction;
(ii) enhancement of cell survival and/or cell proliferation by the test compound; or
(iii) compensation of cytotoxicity caused by another compound.

More preferably, the impact of the test compound onto cell viability, especially the cytostatic and/or cytotoxic effect of the test compound is assessed by the method of embodiment (2).

The test compound may be tested in any concentration in method (2), but preferably it is tested in different concentrations covering a broad concentration range. Furthermore preferred is that at least two different concentrations of the substance are tested. Even more preferentially three or more concentrations are tested. When a concentration is already known as effective concentration it is preferably included in the tested concentration range. In this case, it is preferred that the concentration known as most effective is not the highest concentration in the test. This simplifies the calculation of the dose-response curve. Typical concentrations range from 1 pg up to 100 μg test compound per ml cell suspension culture.

In the method (2), the test compound is applied to the cells in any suitable application form, generally either in solid form, e.g. precoated on the surface of a microtiter plate well or of a cultivation tray or on the surface of inert beads or dissolved in an appropriate solvent (like DMSO or water). The application as a solution is preferred, especially the application in aqueous solution or DMSO. This solution may also be prepared by application of a cell suspension or a solvent to the precoated surface, e.g. by filling a cell suspension into a precoated microtiter plate well.

In a preferred aspect of the method of embodiment (2), the test compound is selected from the group consisting of biological and chemical compounds, including biological modulators, hormones, growth factors, chemotherapeutics (like antineoplastic chemotherapeutics), antibiotics, and combinations thereof. More preferred, the test compound is a growth factor, chemotherapeutic agent or antibiotic. The most preferred test compound is selected from the group consisting of a chemotherapeutic agent, an antineoplastic chemotherapeutic agent and a combination of such agents.

After addition of the test compound, the cells in method (2) are generally incubated under standard conditions which are supporting cell survival and cell proliferation. For cell cultures suitable cell culture media must be chosen. One especially preferred media in the context of present invention is RPMI1640 for human blood tumor cells.

In a preferred aspect of method (2), the incubation takes place in microtiter plates, more preferably in a 96, 384 or 1024 well plate.

The cell concentration for step (a') is adjusted by the number of viable cells per sample. For this adjustment, living and dead cells in the sample are counted with a standard cell counting method, e.g. with a hematocytometer or an automated cell counter, and the cell number is adjusted to the desired cell number afterwards (usually by dilution with culture media). If the incubation is performed in a 96-well plate, there are generally from 5000 to 500000 cells/well, preferably from 10000 to 100000 cells/well, more preferably from 20000 to 30000 cells/well. In other incubation formats (like 384-well plates) with different incubation volumes, the number of cells per μl is similar to the number of cells per μl in the 96-well plate.

In step (a') of method (2), the samples are incubated *in vivo* or preferably *in vitro* with the test compound. The *in vivo* incubation is preferably only performed on non-human animals. It comprises the application of the test compound to the animal and subsequent monitoring of the resulting effect on the animal's cells. Said cells are subsequently isolated from the animal and then counted using the method of embodiment (1).

The incubation in step (a') of method (2) takes place for a specified period of time. The effects of the test compound on the cells in the sample in step (a') are either determined directly after addition of the test compound (incubation time: 0 min) or after an additional time period in cell culture. This period may be a short time period (in the range of seconds and minutes), or a longer time period (hours, days, or even months). Preferably the total time in cell culture does not exceed 2 weeks, more preferably 1 week, most preferably 4 days. On the other hand, the total time in cell culture is preferably no less than 3 days. Of utmost preference is an incubation time of 4 days. Preferably the test compound is added at the beginning of the incubation time and present for the whole time period.

In a preferred aspect of embodiment (2), at least one negative control is performed. In this negative control, a sample is incubated and analyzed without any test compound. The data generated for this condition is used as reference value for judging the intensity of the effects by the test in the parallel assays of the same biological material.

In a further preferred aspect of embodiment (2), a further control for the quality of the analysis is performed. In this control the effect under examination (e.g. cell death) is induced with highest efficiency ("positive control"). In case the reduction of cell viability is analyzed, this means that a compound is added to a sample which kills all or nearly all cells. Preferably, this lethal compound is a salt which kills the cells via influencing the osmotic condition.

In embodiment (3) of present invention, the method of (1) or (2) is used for assessing the cytotoxic or cytostatic effect of anticancer drugs. The cells in the tested samples are cancer cells, preferably cells from one sample isolated from a patient in need of treatment. These cells are incubated with different anticancer drugs or potential anticancer drugs, preferably in a concentration range, and the effect of the different drugs is compared after the flow cytometric analysis.

The cancer cells in embodiment (3) are preferably vertebrate cells, more preferably mammalian cells, most preferably human cells. Moreover, it is preferred that they are isolated cells, e.g. biopsy cells, a blood sample or blood components, i.e. they are not treated with the test compound in the body of origin.

The cancer cells in embodiment (3) are in a first preferred aspect hemoblastosis cells, more preferably hemoblastosis cells selected from the following hemoblastosis types: acute lymphatic leukaemia, acute myeloide leukaemia, Hodgkin's disease or non-Hodgkin's lymphoma, myelodysplastic syndrome, chronic myeloide leukaemia, polycythaemia vera, essential thrombocytaemia, chronic idiopathic myelofibrosis, multiple myeloma, aggressive T- and B-cell lymphoma, precursor lymphoma, precursor leukaemia, indolent T- and B-cell lymphoma, B-chronic lymphatic leukaemia, hair cell leukaemia, prolymphocytic leukaemia, T-cell large granular lymphocyte leukaemia, adult T-cell leukaemia/lymphoma, mycocis fungoides, Sézary syndrome, primary CNS-lymphoma and gastric lymphoma.

The cancer cells in embodiment (3) are in a second preferred aspect cells from solid tumors, preferably from the group consisting of anal carcinoma, small or non-small cell lung carcinoma, CUP-syndrome, carcinoma of the small intestine, Ewing's sarcoma, gall bladder and bile duct carcinoma, glioma, bladder carcinoma, testicular carcinoma, colorectal carcinoma, head, brain or neck carcinoma, corpus carcinoma, liver cell carcinoma, gastric carcinoma, breast carcinoma, medulla blastoma, malignant melanoma, mesothelioma, nasopharyngeal carcinoma, neuroendocrine tumors, renal carcinoma, renal pelvic carcinoma, ureteral carcinoma, oesophageal carcinoma, osteosarcoma, ovarian carcinoma, pancreatic carcinoma, prostate carcinoma, colorectal carcinoma, thyroid carcinoma, vaginal carcinoma, vulva carcinoma, soft-part sarcoma, and cervix carcinoma.

More preferably, the cells in embodiment (3) are hemoblastosis cells, most preferably hemoblastosis cells from B-cell non-Hodgkin's lymphoma or acute myeloide leukaemia.

Embodiment (5) is closely related to embodiment (3). In embodiment (5), the method of embodiment (1) is used for prediction of the biological activity of cytotoxic or cytostatic compounds on cells of the same kind as the cells in the sample. In embodiment (3), these cells are cancer cells and the method is used for assassing the effect of said compounds bon the cells. In a preferred aspect of embodiment (5), the cells are cancer cells and the compounds are anticancer agents.

It is to be noted that the method of embodiments (2), (3) and (5) is especially suitable for prediction of the *in vivo* or *in vitro* biological activity of cytotoxic or cytostatic compounds on cells of the same kind as the cells in the sample. This prediction method can be performed with different cytostatics and different patient samples. This is extremely helpful for a medical practitioner, as it is known that not each anticancer agent is suitable for treatment of different types of cancer, cancer at different stages, and even one kind of cancer at the same stage, but in different patients (compare Example 2). For performing this prediction method, generally a sample of cancer cells which was isolated (e.g. by taking blood or biopsy) from a patient in need of treatment with an anticancer agent is subdivided into several cell samples. Subsequently, several candidate agents are tested in different concentrations on each of these samples. Thus, the practitioner will use this method in order to evaluate the effect of different cytostatics on a patient's cancer cells in an easy and reliable manner and then decide which cytostatics are suitable for therapy in this patient's case.

In other words: the method of present invention is a valuable prognosis tool for prognosing the effect of a test compound on certain cells *in vivo* or *in vitro*. It is reliable, and its prediction quality is sufficient for clinical standards. The prediction quality in the method of present invention equals the prediction quality in the DiSC array, which is already applied for prognosis of the effect of anticancer agents on tumor cells *in vivo* and thus for the success of an anticancer therapy (compare example 3). This prognosis function is one of the main features and applications of present invention.

In a preferred aspect of embodiment (4), the method of present invention is used for identification of compounds which stimulate cell division and cell proliferation *in vivo* and/or *in vitro*; or for identification of compounds which enhance cell viability, preferably by attenuation of undesired side effects of drugs.

The kit of embodiment (6) comprises a selection of cytotoxic or cytostatic compounds which are active agents in the therapy of diseases in a mammal, wherein the compounds are coated onto the surfaces of the wells of a microtiter plate in a predetermined amount. Preferably, each compound is tested (i.e. coated to the surface of a microtiter plate well) in different concentrations covering a broad concentration range. Optionally a positive and/or a negative control as described above are included in the microtiter plate as well. In case of the negative control this means that at least one well per tested kind of cell does not comprise any test compound. In case of the positive control, this means that at least one well per tested kind of cell does comprise a cell lytic agent in a concentration which is high enough to kill substantially all cells in the sample. A schematic representation of a precoated microtiter plate for double determination with cytotoxic drugs including a positive and a negative control is given in example 5.

In the kit according to embodiment (6), the microtiter plate preferably is a 96-, 384- or 1024-well plate. The use of this kind of microtiter plate allows the fast, effective and material saving analysis of a plurality of samples.

The results of any test which compares simultaneously the effects of different treatments of samples from one kind of cell suspension on cell parameters that can be measured by a flow cytometer, including the expression of cell markers, cell survival or proliferation, can be determined by the method of present invention. The classical flow cytometric method only allows analysis of changes in the composition of a cell population. The method of the present invention allows analyzing a cell subpopulation of interest in a sample independently from the changes induced in other cell subpopulations in the sample (see Fig. 3).

Such a simultaneous analysis according to present invention is not unavoidably restricted to an intra-experiment comparison. If one of the analyzed samples is defined as standard, the absolute cell count of this sample can be used to normalize the values for all measured samples. If for example cytotoxic drugs shall be tested it is advisable to take an untreated cell sample as standard. The number of living cells in this standard sample without any cytotoxic drug is defined as 100% cell survival.

(1) The easiest standardization approach to measure the effect of a cytotoxic drug is represented by the value "percent cell survival". The result that a cytotoxic drug reduces cell survival by 20% is comparable from experiment to experiment and from lab to lab.

(2) A more complex standardization is the calculation of an index. In case of the chemosensitity testing it is not a single value that has to be standardized. The chemosensitivity towards a drug is tested with several concentrations of the drug in parallel in a cell culture assay. All results are displayed in a diagram as "percent cell survival" against the drug concentration. The area under the curve (AUC) in such a diagram has proven to be the best criterion to get comparable values. This method was adopted for present invention from the analysis of DiSC assays (Staib et al., British Journal of Haematology, 2005, 128, 783-791).

The Chemosensitivity Index $C_i$ was designed as a prognostic index for *ex vivo* chemosensitivity assays. Assay results were expressed as percent tumor cell survival (% TCS). The dose-response curve as a function of the dose-response relationship may be mathematically described by a linear regression model (Fig. 4). The dose-response curve was defined as $CS = c1*e^{conc*c2}$ %, with cell survival (CS), drug concentration (conc) and the constants c1 and c2. c1 represented the y-axis distance and c2 the slope of the curve. The area under the curve (AUC) as an exact measure for the total dose response relation was defined as $AUC = -e^{c1}/c2$, on condition that c2 is less than 0, otherwise AUC is infinite. The chemosensitivity index, $C_i$, was set up as $C_i = e^{-Auc*c}$ with a domain between 0 and 1. The drug-specific constant c was used for adjusting the $C_i$-value of 0.5 as the cut-off point between resistance and sensitivity. The constant c was defined as

$$c = -\frac{Ln(0.5)}{AUC_{cut-off}},$$

with $AUC_{cut-off}$ as the smallest AUC value among all clinical non-responding patients of the training data set. Obviously, all cytotoxic agents given for treatment were ineffective in these patients. The cut-off $C_i$ value must be adjusted to 0.5 for prognosis of the effect of the drug on a patient *in vivo* when the drug is tested on said patient's cells *in vitro* using the method of present invention. $C_i$ values of 0-0.5 indicated resistance and values above 0.5 predicted sensitivity against the drug tested.

The calculation of an AUC value is a standardization of values for cell survival that makes the values comparable for separate drugs. The implementation of the drug specific constant c is an advanced step that allows as well to compare the effect of different drugs. Further on, this constant c comprises the knowledge of the clinical response of the patients that have been treated with the drug. Hence, constant c allows a direct correlation of the *in vitro* result to the clinical outcome.

But constant c could also be adjusted for a stand-alone *in vitro* assay. In this case the calculated index $C_i$ could be used to display directly any other wanted cut off value. E. g. this cut off value can be adjusted to indicate a chemosensitivity that is reached by only the most sensitive 10% of the samples.

For the calculation of the curve and the calculation of the area under the curve any other mathematical model might be used. Fig. 4 and the preceding explanation are only an exemplary way to calculate an index that is based on the AUC. This way, however, is the preferred way in the context of present invention.

Only one technique is known so far to adjust the constant c. To use this technique in tumor chemosensitivity testing it is absolutely essential to analyze a cohort of patients first to get *ex vivo* data concerning the chemosensitivity and second to get follow up data concerning the therapy success. Therapy success is defined as therapy response (tumor remission) and as patient survival. These criteria, especially the survival, are severe obstacles for the development of chemosensitivity tests for new drugs. Collecting clinical data normally takes 3 years or longer. But according to the known literature, using clinical and *ex vivo* data of the same patient is deemed to be the only valid way to adjust constant c.

Present invention provides a new method to adjust constant c.

All drugs that are in clinical use have been tested in a clinical trial in regard to drug administration (time and dosage), therapeutic effects and side effects. These trials have been performed with a clearly defined representative cohort of patients and/or test persons. The data of these trials are public.

Thus, a preferred aspect of the method of present invention comprises recruiting a cohort of patients, testing of chemosensitivity of the patient samples with an *in vitro* test and deducing constant c for the tested drug. The cohort of patients has to be representative and comparable with the representative cohort of the published clinical trial. Biological samples are taken from the patients and are analyzed *in vitro,* preferably with the chemosensitivity assay of present invention. According to above calculation of a chemosensitivity index $C_i$ the constant c is defined as

$$c = -\frac{Ln(0.5)}{AUC_{cut-off}},$$

wherein $AUC_{cut-off}$ represents the lowest AUC value of a given cohort of patients which do not respond to the test compound ("clinically known non-responders") Obviously, the tested drug given for treatment was ineffective in these patients, thus their AUC value is the appropriate cut-off-value for a Ci value of 0.5. The constant c represents a constant specific for each individual cytotoxic agent serving to adjust its individual $C_i$ value. Therefore the c value needs to be calculated individually for each cytotoxic agent. As the cut-off $C_i$ value is adjusted to 0.5 indicating the changeover from the predicted resistance to sensitivity, the c value is calculated as follows:

$$0.5 = e^{-AUCcut\text{-}off*c} => c = -\frac{Ln(0.5)}{AUC_{cut-off}}$$

$C_i$ values of 0-0.5 indicate resistance and values above 0.5 predict sensitivity of the tested cells against the tested drug. Thus, the method is a useful tool for prognosis whether a certain drug will be efficient or not in the patient whose cells were tested.

In this method for determination of the chemosensitivity index Ci, the preferred test compound is a cytotoxic agent.

The present invention is described in more detail by reference to the following examples. It should be understood that these examples are for illustrative purpose only and are not to be construed as limiting the invention.

**Examples**

In the following examples, standard techniques of FACS technology and cell handling were used that were described in various publications, e.g. Robinson, J.P. et al. (Eds.), Current Protocols in Cytometry, New York, Wiley and Sons, continuing series up to supplement 38, November 2006, and Harrison M.A. and Rae I.F., General Techniques of Cell Culture (Handbooks in Practical Animal Cell Biology) Cambridge, Cambridge University Press, 1997. Unless otherwise indicated, all devices and reagents were used according to the manufacturers' instructions.

The peripheral blood mononuclear cells (pBMC) used in the examples were isolated from peripheral blood samples as described before (Staib, P. et al., Br. J. Haematol., 128(6):783-91 (2005)). The necessary peripheral blood (PB) samples from adult patients diagnosed with chronic lymphatic leukaemia (CLL) were collected into heparin during routine diagnosis prior to administration of chemotherapy.

Example 1: Cytotoxicity of fludarabine phosphate on mononuclear cells

Fludarabine phosphate (Fludara®, Schering, Berlin, Germany) is an antineoplastic agent which interferes with the growth of chronic lymphocytic leukaemia (CLL) cancer cells. Fludarabine phosphate is a fluorinated nucleotide analogue of the antiviral agent vidarabine (ara-A). The chemical name for fludarabine phosphate is 2-Fluoro-9-(5-*O*-phosphono-β-D-arabinofuranosyl)-9*H*-purin-6-amine (2-fluoro-ara-AMP). It is rapidly dephosphorylated to 2-fluoro-ara-A and then phosphorylated intracellularly to 2-fluoro-ara-ATP. This metabolite appears to act by inhibiting DNA polymerase alpha, ribonucleotide reductase, and DNA primase, thus inhibiting DNA synthesis. The mechanism is, however, not completely characterized up to date (Fludara prescribing information, 10/03).

Plate precoating with different amounts of fludarabine phosphate: 50 μl/well of an aqueous fludarabine phosphate solution were given in a 96-well microtiter plate (Greiner BioOne, Frickenhausen, Germany). Four different fludarabine phosphate concentrations (25; 8.33; 2.78; 0.93 μg/ml) were used. The control wells were kept empty. The plates were placed into an exsiccator and dried under vacuum for 8 h.

Peripheral blood mononuclear cells (pBMC) from a patient with chronic lymphatic leukaemia were isolated from the PB samples as described before (Staib, P. et al., Br. J. Haematol., 128(6):783-91 (2005)), resuspended in RPMI 1640 medium (Biochrom, Berlin, Germany) containing 20 vol.% fetal calf serum (FCS; Biochrom, Berlin, Germany) and added into the precoated 96-well plate with a final cell concentration of 10,000 cells/well and a volume of 100 μl. The plates were then agitated for 15 min in order to solubilize the dried fludarabine phosphate. Subsequently, the plates were incubated for 96 h (37 °C, 5 % $CO_2$, humidified atmosphere). Thereafter, 50 μl of an 11 μM propidium iodide (PI)-solution in 0.9% aqueous NaCl solution (NaCl 0.9%) (Invitrogen, Leiden, Netherlands) were added and incubated for 15 min at room temperature. PI is a standard flow cytometric viability probe and is used to distinguish viable from nonviable cells. Viable cells with intact membranes exclude PI, whereas the membranes of dead and damaged cells are permeable to PI. PI only stains cells with compromised cell membrane, whilst live cells which have intact membranes are not stained by PI.

The plates were then analyzed using a FACSArray (BD Biosciences, San Jose, CA, USA) flow cytometer. The following instrument settings were used:

2.0 μl/sec sample flow rate
20 μl sample volume (n. b.: this is no absolute amount, but the set value of the instrument. Thus, the actual volume aspirated and analyzed by the instrument may be higher or lower than 20 μl: however, this actual volume is invariant from sample to sample during the analysis.)
500,000 maximum events (i.e. the number of maximum events exceeds the actual cell number in the sample considerably)
50 μl mixing volume
200 μl/sec mixing speed
3 number of mixes

An identical fixed volume (preset sample volume on instrument: 20 μl) was aspirated from each sample and the absolute amount of living cells was counted. Living cells were defined as events with cellular light scatter characteristics and being negative for PI.

After switch-on and before analyzing a new kind of sample the flow cytometer must be re-calibrated. The sensitivity of each detector (affected e.g. by the voltage of a photomultiplier tube) is adjusted so that particles or cells that are known to be negative for a particular attribute (i.e. marker is not expressed) are displayed within the lowest range of the spectrum of relative values. In addition cut-off values can be defined. Signals below this cut-off will be excluded from data acquisition. All cells with signal intensities above the cut-off are counted. The rectangle shown in figure 1 defines an area of signal intensities (FSC signal and PI signal) that is suitable for counting viable cells. All cells within this rectangle are counted.

Neither the volume counter nor the event counter can be calibrated. The event counter is part of the acquisition and/or analysis software that gives as result how many events with a pre-defined intensity have been measured.

For results of the FACS measurement see Fig. 1; for evaluation of results see Fig. 2 and Tab. 1. The absolute number of living cells was counted. In the control 4163 living cells were measured in the fixed volume. This value was set as control survival (100% cell survival). With increasing amounts of fludarabine phosphate in the wells (i.e., increasing fludarabine phosphate final concentrations in the tested cell suspension) the amount of living cells decreased exponentially and reached finally 4 % cell survival in the presence of 12.5 μg/ml fludarabine phosphate after 96 h of incubation (Figure 2, Table 1).

Tab. 1: Effect of fludarabine phosphate on cell survival. 100% cell survival: cell survival without fludarabine phosphate.

| Fludarabine phosphate, final concentration [μg/ml] | Total living cells counted in the fixed volume | relative cell survival |
|---|---|---|
| 0.00 | 4,163 | 100 % |
| 0.46 | 1,725 | 41 % |
| 1.39 | 758 | 18 % |
| 4.17 | 347 | 8 % |
| 12.50 | 186 | 4 % |

Example 2: Cytotoxicity of several antineoplastic agents on pBMC

pBMC from patients with CLL were tested and analyzed as described in example 1. The plate precoating was performed with the following test compounds in separate wells in endconcentration ranges which cover clinically used concentrations: 0.061 μg/ml, 0.185 μg/ml, 0.55 μg/ml, 1.66 μg/ml and 5 μg/ml fludarabine phosphate (Fludara®, Schering, Berlin, Germany), 0.0008 μg/ml, 0.003 μg/ml, 0.012 μg/ml, 0.05 μg/ml and 0.2 μg/ml Cladribine (Leustatin®, Janssen-Cilag, Beerse, Belgium), 0.006 μg/ml, 0.018 μg/ml, 0.055 μg/ml, 0.167 μg/ml and 0.5 μg/ml Novantrone® (Mitoxantrone, Melville, NY, USA), 0.012 μg/ml, 0.037 μg/ml, 0.11 μg/ml, 0.33 μg/ml and 1 μg/ml Oncovin® (Vincristin, Lilly, Indianapolis, USA), and 0.009 μg/ml, 0.039 μg/ml, 0.156 μg/ml, 0.625 μg/ml and 2.5 μg/ml Prednisolone (Prednisolut®, Hexal, Holzkirchen, Germany), all in aqueous solution. After drying the drug solution pBMCs were added in 50 μl cell culture medium to each well as described in example 1.

$LC_{90}$ doses were determined by calculating the dose at which the fitted survival probability was equal to 10 % as described before (Bosanquet, A.G. and Bosanquet, M.I., Leukemia 14(4):712-715 (2000)). The results are given in table 2.

Table 2: $LC_{90}$ of pBMCs from different CLL patients after *ex vivo* treatment of the cells with different antineoplastic agents

| Patient | Cladribine ® | Fludara ® | Novantrone ® | Oncovin ® | Prednisolone ® |
|---|---|---|---|---|---|
| #1 | 0.185 | 69.69 | 0.06 | 2.51 | 40.69 |
| #2 | 0.184 | 11.74 | 0.03 | 0.47 | 21.96 |
| #3 | 0.159 | 0.09 | 0.19 | 0.14 | 12.17 |
| #4 | 0.107 | 26.00 | 0.15 | 10.96 | 2.25 |
| #5 | 0.083 | 0.46 | 0.11 | 0.33 | 12.67 |
| #6 | 0.080 | 18.17 | 13.37 | 0.07 | 0.88 |
| #7 | 0.063 | 13.25 | 0.14 | 0.88 | 35.35 |
| #8 | 0.059 | 15.02 | 0.02 | 10.23 | 29.81 |
| #9 | 0.052 | 0.94 | 0.10 | 0.47 | 33.00 |
| #10 | 0.048 | 0.01 | 0.05 | 0.41 | 11.71 |
| #11 | 0.047 | 2.15 | 12.80 | 0.21 | 0.46 |
| #12 | 0.040 | 0.33 | 0.06 | 0.97 | 0.86 |
| #13 | 0.029 | 0.82 | 0.40 | 0.24 | 2.56 |
| #14 | 0.027 | 0.86 | 0.09 | 0.04 | 0.56 |
| #15 | 0.024 | 0.58 | 0.05 | 0.44 | 0.82 |
| #16 | 0.017 | 0.22 | 0.01 | 0.13 | 0.19 |
| #17 | 0.015 | 0.55 | 0.03 | 0.41 | 35.69 |
| #18 | 0.013 | 0.55 | 0.08 | 0.70 | 0.51 |
| #19 | 0.007 | 0.50 | 0.07 | 0.10 | 0.98 |
| #20 | 0.006 | 0.00 | 0.02 | 0.42 | 99.92 |
| #21 | 0.005 | 0.11 | 0.05 | 0.10 | 0.54 |
| #22 | 0.004 | 81.92 | 0.05 | 0.30 | 12.76 |
| #23 | 0.000 | 0.01 | 0.01 | 0.08 | 0.82 |
| #24 | 8.100 | 23.76 | 12.77 | 61.57 | 48.18 |

(continued)

| Patient | Cladribine ® | Fludara ® | Novantrone ® | Oncovin ® | Prednisolone ® |
|---|---|---|---|---|---|
| #25 | 1.967 | 35.21 | 0.17 | 0.23 | 0.48 |

This result shows that the measurement can be performed with different cytostatics and different patient samples. Furthermore, it demonstrates that not every cytostatic agent is efficient in one and the same patient. Thus, the practitioner will use this method in order to evaluate different cytostatics for treatment in an easy and reliable manner.

Example 3: Comparison of the cytotoxicity assay of example 1 with the DiSC assay

The chemosensitivity index $C_i$ based on the DiSC assay as described in Staib, P. et al., Br. J. Haematol., 128 (6):783-91 (2005) is known to have a very high accuracy of prediction (98 %) for the clinical outcome of a particular chemotherapy (Staib, P. et al., Br. J. Haematol., 128(6):783-91 (2005)). In order to evaluate the accuracy of the cytotoxicity assay as described in example 1 ("new method"), the $C_i$ determination was performed for assay results of patient samples analyzed with the traditional DiSC assay and - in parallel - with the new assay method described in example 1. In total, 22 patient samples were analyzed. Fludara® was used in both assays. The cytotoxicity assay of example 1 was performed as described therein, and the DiSC assay was performed as described in Staib, P. et al., Br. J. Haematol., 128(6):783-91 (2005).

Result (Table 3): Of 22 patients, 15 patients (68%) were predicted as sensitive in both assays, whereas 7 patients (32 %) were predicted as resistant in both assays. The overall match of prediction results from both assays was 100 %. Thus, the prediction quality in the method of present invention equals the prediction quality in the DiSC array.

Table 3: $C_i$ prediction results for the method of present invention ("new method") and the DiSC method.

| Patient | DiSC-Assay | | New Method | |
|---|---|---|---|---|
| | Ci | prediction | Ci | prediction |
| #1 | 0.99 | sensitive | 0.99 | sensitive |
| #2 | 0.98 | sensitive | 0.94 | sensitive |
| #3 | 0.97 | sensitive | 0.99 | sensitive |
| #4 | 0.95 | sensitive | 0.89 | sensitive |
| #5 | 0.90 | sensitive | 0.93 | sensitive |
| #6 | 0.89 | sensitive | 0.79 | sensitive |
| #7 | 0.85 | sensitive | 0.74 | sensitive |
| #8 | 0.81 | sensitive | 0.83 | sensitive |
| #9 | 0.75 | sensitive | 0.65 | sensitive |
| #10 | 0.70 | sensitive | 0.74 | sensitive |
| #11 | 0.68 | sensitive | 0.60 | sensitive |
| #12 | 0.61 | sensitive | 0.81 | sensitive |
| #13 | 0.60 | sensitive | 0.65 | sensitive |
| #14 | 0.57 | sensitive | 0.63 | sensitive |
| #15 | 0.55 | sensitive | 0.71 | sensitive |
| #16 | 0.50 | resistant | 0.35 | resistant |
| #17 | 0.47 | resistant | 0.41 | resistant |
| #18 | 0.46 | resistant | 0.35 | resistant |
| #19 | 0.43 | resistant | 0.24 | resistant |
| #20 | 0.39 | resistant | 0.36 | resistant |
| #21 | 0.34 | resistant | 0.41 | resistant |
| #22 | 0.32 | resistant | 0.24 | resistant |

| DiSC-Assay | New method | |
|---|---|---|
| | sensitive | resistant |
| sensitive | 68% (15) | 0 |
| resistant | 0 | 32% (7) |

Thus, the advantage of the method of present invention in comparison to the DiSC assay resides in the fact that it is performed faster and in an automated fashion. The good prediction values of the DiSC assay are only achievable by tiresome microscopic cell count. This does not only consume time, but also needs expert knowledge and patience. In contrast thereto, the method of present invention is fast, easy to handle and does not require a technical expert.

Example 4: Comparison of two methods of flow cytometric analysis of cells

PBMCs were isolated from human blood by density gradient centrifugation as described (Staib et al., Br. J. Haematol., 128(6):783-91 (2005)). Cells were counted microscopically with a Neubauer cytometer. The cell solution was set up to $5 \times 10^5$ cells/ml. Half of these cells were killed with IntraPrep 1 (Beckman Coulter) according to the manufacturer's instruction. The other half stayed alive. The following dilution series was performed:

1) 100 µl dead cells, 100 µl living cells, 100 µl PI (propidium iodide) staining solution
2) 50 µl dead cells, 100 µl living cells, 50 µl NaCl 0.9%, 100 µl PI staining solution
3) 25 µl dead cells, 100 µl living cells, 75 µl NaCl 0.9%, 100 µl PI staining solution
4) 12.5 µl dead cells, 100 µl living cells, 87.5 µl NaCl 0.9%, 100 µl PI staining solution
5) 6.25 µl dead cells, 100µl living cells, 93.75 µl NaCl 0.9%, 100 µl PI staining solution

The PI staining solution was prepared with 1 ml NaCl 0.9% and 6 µl PI.
After 15 min incubation the cells were measured with the FACSArray. With each sample 2 different kinds of measurements were performed: at first 3000 total events were analyzed according to the manufacturer's instructions without using an internal or external standard and without adjusting a certain volume (method 1, "classical method") and afterwards a fixed volume was measured (method 2, described in example 1).
The information that the number of living cells was identical in all samples was lost when the classical flow cytometric analysis (method 1) was performed. When a constant sample volume was applied to the instrument and measured in total the information "all samples contain the same number of living cells" got obvious (method 2) (compare Fig. 3 and Table 4). This shows the convincing advantage of the method of present invention.

Table 4: Amount of counted living cells in method 1 and 2.

| Dilution | Living cells/ml | Dead cells/ml | method 1 count of 3000 cells | method 2 count of a fix volume |
|---|---|---|---|---|
| 1 | 16700 | 167000 | 1242 | 1822 |
| 2 | 16700 | 83300 | 1722 | 1870 |
| 3 | 16700 | 41700 | 1971 | 1785 |
| 4 | 16700 | 20800 | 2193 | 1735 |
| 5 | 16700 | 10400 | 2400 | 1735 |
| Mean: 1789 | | | | |
| relative standard deviation: 3% | | | | |

Example 5: Schematic representation of a precoated microtiter plate for double determination with cytotoxic drugs.

pos.: positive control; neg.: negative control; conc 1: highest concentration of the cytotoxic drug; conc 6: lowest concentration of the cytotoxic drug

| A | pos. | pos. |
|---|---|---|
| B | drug conc 1 | drug conc 1 |
| C | drug conc 2 | drug conc 2 |
| D | drug conc 3 | drug conc 3 |
| E | drug conc 4 | drug conc 4 |
| F | drug conc 5 | drug conc 5 |
| G | drug conc 6 | drug conc 6 |
| H | neg. | neg. |

**Claims**

1. A method for comparing the content of a specific cell subpopulation in at least two samples of same or different liquid cell suspensions by determining the count of cells of said specific subpopulation per unit volume in each of said at least two samples, said method comprising the steps of

   (a) supplying a predetermined fixed volume of each sample without prior addition of an internal standard to a flow cytometer with fixed volume acquisition and delivery means;
   (b) detecting and counting the total number of the cells of the specific cell subpopulation in the complete fixed volume from step (a) by flow cytometry without the use of an internal or external standard;
   (c) calculating the number of counted cells per fixed volume (absolute cell count) for the specific cell subpopulation within the sample from the count result and the predetermined aspirated volume without the use of an internal or external standard; and
   (d) comparing the absolute cell count of the samples with each other, thus determining whether the samples contain the same or different amounts of the specific cell subpopulation.

2. The method of claim 1 wherein the flow cytometer discriminates between cells of different cell subpopulations by optical measurement, preferably is a fluorescence activated cell sorter (FACS), and the cells of different subpopulations are discriminated from each other by their emission of fluorescence and/or scattered light.

3. The method of claim 1 or 2, wherein the cell subpopulation is **characterized by** specific markers which are detectable by the flow cytometer, preferably the subpopulation consists of living cells.

4. The method of any one of claims 1 to 3, wherein the effect of a test compound on cell viability is determined, and which additionally comprises one or both of the steps

   (a') incubation of the cells with the test compound prior to step (a); and
   (e) correlating the decrease or increase of the absolute cell count of viable cells in samples containing different test compound concentrations to the concentration of the test compound.

5. The method of claim 4, wherein the determined effect of the test compound is

   (i) cytotoxicity and/or cytostasis induction;
   (ii) enhancement of cell survival and/or cell proliferation by the test compound; or
   (iii) compensation of cytotoxicity caused by another compound.

6. The method of claim 4 or 5,
   wherein the test compound is a cytotoxic agent (drug) and the chemosensitivity index $C_i$ is used as prognostic index, wherein

$$C_i = e^{-AUC*c}$$

   and

$$c = -\frac{Ln(0.5)}{AUC_{cut-off}} \, ,$$

   with
   AUC: area under the curve of the dose-response curve determined for the test compound in step (e),
   $AUC_{cut-off}$ : lowest AUC value of a cohort of patients which do not respond to the tested drug ("non-responders"), and
   c: drug specific constant representative for the clinical response of said cohort of non-responders.

7. The method of claim 6, wherein a Ci value greater than 0.5 indicates the sensitivity of the tested cells against the test compound.

8. The method of any one of claims 1 to 7, which additionally comprises one or more of the following steps:

   (a") treatment of the sample with a cell specific marker prior to supplying it to the flow cytometer; and
   (b') determination of absolute cell count of one or more specific cell types in the sample.

9. The method of any one of claims 1 to 8, which is for assessing the cytotoxic or cytostatic effect of anticancer drugs, wherein the cells in the sample are cancer cells, preferably vertebrate cells, more preferably mammalian cells, most preferably human cells.

10. The method of claim 9, wherein the cells in the sample are cells from hemoblastosis or from a solid tumor, preferably are hemoblastosis cells.

11. The method of any one of claims 1 to 10 which is used for identification of

   (i) cytostatic and/or cytotoxic compounds;
   (ii) antagonists to cytostatic and/or cytotoxic compounds;
   (iii) compounds which enhance cell viability; or
   (iv) compounds stimulating cell division.

12. The method of claim 11, wherein

   (i) the identified compounds are for stimulating cell division and cell proliferation *in vivo* and/or *in vitro*; or
   (ii) the identified compounds are for enhancing cell viability, preferably for attenuation of undesired side effects of medicaments.

13. The method of any one of claims 1 to 10 for prediction of the *in vivo* or *in vitro* biological activity of cytotoxic or cytostatic compounds on cells of the same kind as the cells in the sample.

14. The method of claim 13, wherein the cells are cancer cells and the compounds are anticancer agents.

15. Kit for performing the method of any one of claims 1 to 14, comprising a selection of cytotoxic or cytostatic compounds which are active agents in the therapy of diseases in a mammal, and optionally a positive and/or a negative control, wherein the compounds and the optional control are coated onto the surfaces of the wells of a microtiter plate in a predetermined amount.

16. A kit according to claim 15, wherein the microtiter plate is a 96-, 384- or 1024-well plate.

**Fig. 1**

**Fig.2**

**Fig.3**

TCS data
TCS (% tumor cell survival)

Dose-Response-Curve
$$CS = c1 * e^{conc*c2} \%$$

Area under the curve
$$AUC = -\frac{e^{c1}}{c2}$$

Chemosensitivity-Index $C_i$
$$C_i = e^{-AUC*c}$$

$>0,5 \quad C_i \quad \leq 0,5$

sensitive  resistant

**Fig.4**

**European Patent Office**

**EUROPEAN SEARCH REPORT**

Application Number

EP 06 12 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/102165 A (NOVASITE PHARMACEUTICALS INC [US]; BEERNINK ANDREW [US]; BENNETT TERES) 25 November 2004 (2004-11-25)<br>* page 2, paragraph 2 - page 3, paragraph 2 *<br>* page 3, paragraph 5 *<br>* page 9, paragraph 3 *<br>* page 29, paragraph 3 - page 30, paragraph 1 *<br>* page 31, paragraph 2 *<br>* page 32, line 16 - page 33, paragraph 1 *<br>* page 36, paragraph 4 - page 37, paragraph 1 *<br>* page 38, paragraph 2 *<br>* page 40, paragraph 2 - page 40, paragraph 3 *<br>* page 43, paragraph 4 *<br>* page 43, paragraph 4 - page 44, paragraph 2 *<br>* page 60, paragraph 3 - page 61, paragraph 2 *<br>* figures 1-15 *<br>-----<br>-/-- | 1-4,8, 15,16 | INV.<br>G01N15/14<br>C12M1/34<br><br><br><br><br><br><br><br><br><br><br><br><br><br><br>TECHNICAL FIELDS SEARCHED (IPC)<br><br>G01N<br>C12M |

The present search report has been drawn up for all claims

| Place of search | Date of completion of the search | Examiner |
|---|---|---|
| The Hague | 16 May 2007 | Koch, Anette |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**European Patent Office**

**EUROPEAN SEARCH REPORT**

Application Number

EP 06 12 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 5 437 200 A (HOLLINGER JOHN D [US])<br>1 August 1995 (1995-08-01)<br><br><br>* column 1, line 7 - column 1, line 49 *<br>* column 2, line 3 - column 2, line 18 *<br>* column 2, line 60 - column 3, line 29 *<br>* column 4, line 47 - column 5, line 2 *<br>* column 5, line 6 - column 5, line 36 *<br>* column 5, line 48 - column 6, line 14 *<br>* column 6, line 24 - column 6, line 38 *<br>* column 10, line 60 - column 10, line 68 *<br>* column 11, line 47 - column 12, line 8 *<br>* column 13, line 8 - column 13, line 14 *<br>* figures 1,2,6 *<br>----- | 1,3,8,9,<br>13,14<br>4-7,<br>10-12<br>15 | |
| D,Y | DATABASE MEDLINE [Online]<br>US NATIONAL LIBRARY OF MEDICINE (NLM),<br>BETHESDA, MD, US; March 2005 (2005-03),<br>STAIB PETER ET AL: "Prediction of<br>individual response to chemotherapy in<br>patients with acute myeloid leukaemia<br>using the chemosensitivity index Ci."<br>XP002433897<br>Database accession no. NLM15755281<br>* abstract *<br>-& BRITISH JOURNAL OF HAEMATOLOGY MAR<br>2005,<br>vol. 128, no. 6, March 2005 (2005-03),<br>pages 783-791, XP002433893<br>ISSN: 0007-1048<br>-----<br>-/-- | 4-7,<br>10-12 | TECHNICAL FIELDS SEARCHED (IPC) |

The present search report has been drawn up for all claims

| Place of search | Date of completion of the search | Examiner |
|---|---|---|
| The Hague | 16 May 2007 | Koch, Anette |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**European Patent Office**

**EUROPEAN SEARCH REPORT**

Application Number

EP 06 12 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/032193 A1 (NARISADA NORIYUKI [JP]) 13 February 2003 (2003-02-13) | 1,3,8 | |
| A | * paragraph [0007] - paragraph [0008] * <br> * paragraph [0021] - paragraph [0026] * <br> * paragraph [0034] - paragraph [0043] * <br> * paragraph [0052] - paragraph [0059] * <br> ----- | 15 | |
| X | EP 0 443 700 A (MITSUBISHI HEAVY IND LTD [JP]) 28 August 1991 (1991-08-28) <br> * abstract * <br> * page 3, line 42 - page 4, line 10 * <br> * page 7, line 49 - page 7, line 52 * <br> * figures 1,2 * <br> ----- | 1 | |
| A | WO 97/19189 A (MEDENICA RAJKO D [US]) 29 May 1997 (1997-05-29) <br> * abstract * <br> ----- | 1-15 | |

TECHNICAL FIELDS SEARCHED (IPC)

The present search report has been drawn up for all claims

| Place of search | Date of completion of the search | Examiner |
|---|---|---|
| The Hague | 16 May 2007 | Koch, Anette |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 6431

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2007

| Patent document cited in search report | | Publication date | Patent family member(s) | | Publication date |
|---|---|---|---|---|---|
| WO 2004102165 | A | 25-11-2004 | AU | 2004239716 A1 | 25-11-2004 |
| | | | CA | 2524782 A1 | 25-11-2004 |
| | | | EP | 1625385 A1 | 15-02-2006 |
| | | | JP | 2007504837 T | 08-03-2007 |
| US 5437200 | A | 01-08-1995 | AU | 6030394 A | 15-08-1994 |
| | | | EP | 0730730 A1 | 11-09-1996 |
| | | | JP | 8505942 T | 25-06-1996 |
| | | | WO | 9416305 A2 | 21-07-1994 |
| | | | US | 5542305 A | 06-08-1996 |
| US 2003032193 | A1 | 13-02-2003 | NONE | | |
| EP 0443700 | A | 28-08-1991 | US | 5389544 A | 14-02-1995 |
| WO 9719189 | A | 29-05-1997 | AU | 7739396 A | 11-06-1997 |
| | | | US | 5736129 A | 07-04-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9719189 A
- WO 9604544 A
- WO 9416305 A
- WO 0020873 A
- WO 02101360 A
- EP 0529666 A

**Non-patent literature cited in the description**

- **CODER, D.M.** Assessment of Cell Viability. *Current Protocols in Cytometry,* 1997, 9.2.1-9.2.14
- **COURTENAY, V.D. ; MILLS, J.** *Br. J. Cancer,* 1978, vol. 37 (2), 261-8
- **COLE, S.P.** *Cancer Chemother. Pharmacol.,* 1986, vol. 17 (3), 259-63
- **STAIB, P. et al.** *BMC Cancer,* 2005, vol. 5 (1), 60
- **WEISENTHAL, L.M. et al.** *Cancer Res.,* 1983, vol. 43, 258-264
- **BIRD, M.C. et al.** *Leukemia Res.,* 1986, vol. 10, 445-449
- **STAIB, P. et al.** *Br. J. Haematol.,* 2005, vol. 128 (6), 783-91
- **KASPERS, G.J. et al.** *Br. J. Cancer,* 1994, vol. 70, 1047-1052
- **STAIB et al.** *British Journal of Haematology,* 2005, vol. 128, 783-791
- Current Protocols in Cytometry. Wiley and Sons, November 2006
- General Techniques of Cell Culture. **HARRISON M.A.** Handbooks in Practical Animal Cell Biology. Cambridge University Press, 1997
- **BOSANQUET, A.G. ; BOSANQUET, M.I.** *Leukemia,* 2000, vol. 14 (4), 712-715
- **STAIB et al.** *Br. J. Haematol.,* 2005, vol. 128 (6), 783-91